# EUROPEAN PATENT APPLICATION

(11) **EP 4 195 806 A1**
(43) Date of publication of application: **14.06.2023**
(21) Application number: 20948688.5
(22) Date of filing: 05.08.2020
(51) Int. Cl.: H04W 68/02

(54) **PROBLEM REPORTING METHOD AND APPARATUS, AND PROBLEM RECEIVING METHOD AND APPARATUS**

(71) Applicant: Beijing Xiaomi Mobile Software Co., Ltd., Beijing 100085 (CN)
(72) Inventor: HONG, Wei, Beijing 100085 (CN)
(74) Representative: Kudlek, Franz Thomas
(86) International application number: PCT/CN2020/107100
(87) International publication number: WO 2022/027312

(57) **Abstract**

The present disclosure relates to a problem reporting method and apparatus, and a problem receiving method and apparatus. The problem reporting method comprises: in response to determining a communication conflict problem between at least two SIMs among a plurality of SIM cards, reporting the communication conflict problem to a base station. According to the embodiments P of the present disclosure, a terminal can report a communication conflict problem between SIM cards to a base station, such that the base station can provide a solution for the terminal according to the communication conflict problem, thereby solving a communication conflict problem between SIM cards in a terminal, such that the terminal can smoothly communicate using a plurality of SIM cards.

## Description

### TECHNICAL FIELD

The disclosure relates to a field of communication technologies, and more specifically to a method and an apparatus for reporting a problem, a method and an apparatus for receiving a problem, an electronic device and a computer readable storage medium.

### BACKGROUND

With the development of communication technologies, a terminal such as a mobile phone may be provided with a plurality of subscriber identity module (SIM) cards therein, rather than being limited to supporting one SIM card.

Communication of different SIM cards is generally implemented based on the terminal itself, or is implemented based on operator networks accessed by the SIM cards, without uniform standards, which may result in a problem caused by the same terminal communicating using different SIM cards.

### SUMMARY

For this purpose, a method and an apparatus for reporting a problem, a method and an apparatus for receiving a problem, an electronic device and a computer readable storage medium are provided in embodiments of the disclosure, to solve technical problems in the related art.

According to a first aspect of embodiments of the present disclosure, there is provided a method for reporting a problem, applicable for a terminal provided with a plurality of SIM cards. The method includes:
in response to determining that a problem of communication conflict exists between at least two SIM cards among the plurality of SIM cards, reporting the problem of communication conflict to a base station.

According to a second aspect of embodiments of the present disclosure, there is provided a method for receiving a problem, applicable for a base station. The method includes:
receiving a problem of communication conflict between at least two SIM cards among a plurality of SIM cards of a terminal sent by the terminal.

According to a third aspect of embodiments of the present disclosure, there is provided an apparatus for reporting a problem, applicable for a terminal provided with a plurality of SIM cards. The apparatus includes:
a problem reporting module, configured to, in response to determining that a problem of communication conflict exists between at least two SIM cards among the plurality of SIM cards, report the problem of communication conflict to a base station.

According to a fourth aspect of embodiments of the present disclosure, there is provided an apparatus for receiving a problem, applicable for a base station. The apparatus includes:
a problem receiving module, configured to receive a problem of communication conflict between at least two SIM cards among a plurality of SIM cards of a terminal sent by the terminal.

According to a fifth aspect of embodiments of the present disclosure, there is provided an electronic device. The electronic device includes:
a processor; and
a memory configured to store instructions executable by the processor;
the processor is configured to implement the method for reporting a problem as described in the above any embodiment, and/or the method for receiving a problem as described in the above any embodiment.

According to a sixth aspect of embodiments of the present disclosure, a computer readable storage medium with a computer program stored thereon is provided. The program implements the method for reporting a problem as described in the above any embodiment, and/or steps of the method for receiving a problem as described in the above any embodiment when executed by a processor.

According to embodiments of the present disclosure, the terminal may report the problem of communication conflict between the SIM cards to the base station, to enable the base station to provide a solution for the terminal based on the problem of communication conflict. Therefore, the problem of communication conflict between the SIM cards in the terminal may be solved, and the terminal may smoothly communicate using the plurality of SIM cards.

### BRIEF DESCRIPTION OF THE DRAWINGS

In order to explain the technical solutions in embodiments of the present disclosure more clearly, the drawings described in the embodiments will be briefly introduced below. Obviously, the diagrams described as below are only some embodiments of the present disclosure. Those skilled in the art may obtain other illustrative creative work.
FIG. 1 is a flow diagram illustrating a method for reporting a problem according to an embodiment of the present disclosure.
FIG. 2 is a flow diagram illustrating another method for reporting a problem according to an embodiment of the present disclosure.
FIG. 3 is a flow diagram illustrating another method for reporting a problem according to an embodiment of the present disclosure.
FIG. 4 is a flow diagram illustrating another method for reporting a problem according to an embodiment of the present disclosure.
FIG. 5 is a flow diagram illustrating another method for reporting a problem according to an embodiment of the present disclosure.
FIG. 6 is a flow diagram illustrating another method for reporting a problem according to an embodiment of the present disclosure.
FIG. 7 is a flow diagram illustrating another method for reporting a problem according to an embodiment of the present disclosure.
FIG. 8 is a flow diagram illustrating another method for reporting a problem according to an embodiment of the present disclosure.
FIG. 9 is a flow diagram illustrating another method for reporting a problem according to an embodiment of the present disclosure.
FIG. 10 is a flow diagram illustrating a method for receiving a problem according to an embodiment of the present disclosure.
FIG. 11 is a flow diagram illustrating another method for receiving a problem according to an embodiment of the present disclosure.
FIG. 12 is a flow diagram illustrating another method for receiving a problem according to an embodiment of the present disclosure.
FIG. 13 is a flow diagram illustrating another method for receiving a problem according to embodiments of the present disclosure.
FIG. 14 is a flow diagram illustrating another method for receiving a problem according to an embodiment of the present disclosure.
FIG. 15 is a flow diagram illustrating another method for receiving a problem according to an embodiment of the present disclosure.
FIG. 16 is a flow diagram illustrating another method for receiving a problem according to an embodiment of the present disclosure.
FIG. 17 is a block diagram illustrating an apparatus for reporting a problem according to an embodiment of the present disclosure.
FIG. 18 is a block diagram illustrating another apparatus for reporting a problem according to an embodiment of the present disclosure.
FIG. 19 is a block diagram illustrating another apparatus for reporting a problem according to an embodiment of the present disclosure.
FIG. 20 is a block diagram illustrating another apparatus for reporting a problem according to an embodiment of the present disclosure.
FIG. 21 is a block diagram illustrating another apparatus for reporting a problem according to an embodiment of the present disclosure.
FIG. 22 is a block diagram illustrating another apparatus for reporting a problem according to an embodiment of the present disclosure.
FIG. 23 is a block diagram illustrating an apparatus for receiving a problem according to an embodiment of the present disclosure.
FIG. 24 is a block diagram illustrating another apparatus for receiving a problem according to embodiments of the present disclosure.
FIG. 25 is a block diagram illustrating another apparatus for receiving a problem according to an embodiment of the present disclosure.
FIG. 26 is a block diagram illustrating another apparatus for receiving a problem according to an embodiment of the present disclosure.
FIG. 27 is a block diagram illustrating another apparatus for receiving a problem according to embodiments of the present disclosure.
FIG. 28 is a block diagram illustrating another apparatus for receiving a problem according to an embodiment of the present disclosure.
FIG. 29 is a block diagram illustrating an apparatus for receiving a problem according to an embodiment of the present disclosure.
FIG. 30 is a block diagram illustrating an apparatus for reporting a problem according to an embodiment of the present disclosure.

### DETAILED DESCRIPTION

The technical scheme in embodiments of the present disclosure will be described clearly and completely in combination with the appended drawings in embodiments of the present disclosure. It is obvious that the embodiments described are only a part of embodiments in the present disclosure, rather than the whole embodiments. On the basis of embodiments of the present disclosure, all other embodiments obtained by those skilled in the art without creative work are within the protection scope of the present disclosure.

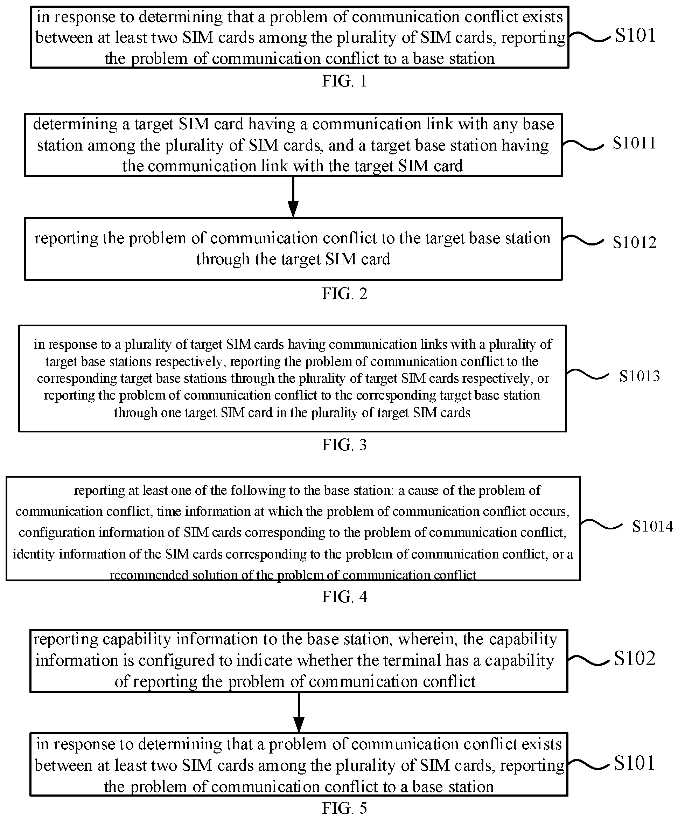

FIG. 1 is a flow diagram illustrating a method for reporting a problem according to an embodiment of the present disclosure. The method as illustrated in this embodiment may be applicable for a terminal. The terminal may include, but not limited to, a mobile phone, a tablet computer, a wearable device, a sensor, an Internet of things device and other electronic devices. The terminal as a user equipment (UE) may communicate with a base station. The base station may include, but not limited to, a 4G base station, a 5G base station and a 6G base station.

The terminal may be provided with a plurality of SIM cards, and all or part of SIM cards among the plurality of SIM cards may access different operator networks respectively or may access a same operator network. A communication mode supported by the plurality of SIMs may be set as required, such as dual-card single-standby, dual-card dual-standby single-pass, and dual-card dual-standby dual-pass.

As illustrated in FIG. 1, the method for reporting the problem may include the following steps.

At step S101, in response to determining that a problem of communication conflict exists between at least two SIM cards among the plurality of SIM cards, the problem of communication conflict is reported to a base station.

In an embodiment, the terminal may report the problem of communication conflict to the base station in response to determining the problem of communication conflict exists between the at least two SIM cards among the plurality of SIM cards.

Determining that the problem of communication conflict exists between the at least two SIM cards among the plurality of SIM cards by the terminal may refer to determining that the problem of communication conflict has existed between the at least two SIM cards, or may refer to predicting that the problem of communication conflict is to be occurred between the at least two SIM cards.

In an embodiment, the problem of communication conflict may include, but not limited to, a problem of paging collision, a problem of communication link interruption, or a problem of failure connection for a service to be connected. When the plurality of SIM cards include more than two SIM cards, a problem of communication between SIM cards may not be limited to a communication problem between two SIM cards. Illustrative descriptions are made below in a case where the plurality of SIM cards include a SIM card 1 and a SIM card 2.

The SIM card 1 and the SIM card 2 have different identifiers. The base station may calculate timings of receiving a paging signaling based on the identifiers of the SIM card 1 and the SIM card 2. Part of the calculated timings of receiving the paging signaling may overlap, which may cause the SIM card 1 and the SIM card 2 to receive the paging signaling at the same timing of receiving the paging signaling, resulting in the problem of paging collision.

When the terminal is communicating through the SIM card 1, in response to the base station paging the SIM card 2 due to requiring for the SIM card 2 to connect the service, whether the SIM card 2 is able to receive the paging signaling and whether the SIM card 2 is able to respond to the paging signaling after receiving the paging signaling may be implemented based on configuration of the terminal. For example, the configuration of the terminal includes automatically ignoring demands of other SIM cards for receiving the paging signaling in a process of communicating through one SIM, then the problem of the service to be connected failure to connect will occur.

When the terminal is communicating through the SIM card 1, in response to the base station paging the SIM card 2 due to requiring for the SIM card 2 to connect the service, the terminal may respond to the paging signaling of the base station through the SIM card 2 based on the configuration of the terminal, and the terminal may automatically disconnect a communication link of the SIM card 1 in a case that the terminal lacks a suspension mechanism for a current communication. Since the communication link of the SIM card 1 is automatically disconnected, the base station of a network accessed by the SIM card 1 still continues to connect the SIM card 1, resulting in interruption of the communication link.

When the terminal is communicating through the SIM card 1, in response to the base station paging the SIM card 2 due to requiring for the SIM card 2 to connect the service, the terminal may receive the paging signaling of the base station through the SIM card 2 based on the configuration of the terminal. Although the communication link of the SIM card 1 is not completely disconnected, a communication signal of the communication link of the SIM card 1 still may be weakened in a short time (for example, about 20 ms), and the network accessed by the first SIM card 1 may deal with this situation as shadow fading, instead of automatically determining a cause of signal weakening, which may result in improving a signal power or adjusting a link adaptive algorithm. However, the cause of signal weakening is actually not the shadow fading. Therefore, the above action performed by the network belongs to a useless action, which also belongs to the problem of communication link interruption.

When the terminal is communicating using the SIM card 1, in response to requiring for the SIM card 2 to receive information, such as system information of the network accessed by the SIM card 2, the terminal may receive the system information by accessing the corresponding network through the SIM card 2 based on the configuration of the terminal, and switch back to the SIM card 1 for continuing the communication, which may cause the communication link of the SIM card 1 to be interrupted for a long time (for example, about 1 second). The network may generally determine this situation as a communication error, which also belongs to the problem of communication link interruption.

When the terminal is communicating through the SIM card 1, in response to requiring for the network accessed by the SIM card 2 to perform tracking area update (TAU), the terminal may receive related information of the tracking area update by accessing the corresponding network through the SIM card 2 based on the configuration of the terminal, and switch back to the SIM card 1 for continuing the communication , which may cause the communication link of the SIM card 1 to be interrupted for a longer time (for example, several seconds), which also belongs to the problem of communication link interruption.

It should be noted that reporting the problem of communication conflict to the base station by the terminal may be different based on different problems of communication conflict.

For example, when the problem of communication conflict is the problem of paging collision, the terminal may send identifiers of the plurality of SIM cards corresponding to the problem of paging collision to the base station, such that the base station may recalculate the timings for receiving the paging signaling for the SIM cards based on the identifiers of the SIM cards. Therefore, overlapping of the timings of receiving the paging signaling for different SIM cards may be avoided.

For example, when the problem of communication conflict is the problem of communication link interruption, the terminal may send the cause of the problem to the terminal, for example, the cause may be that the SIM card 2 monitors the paging signaling in another operator network, and the SIM card 2 monitors a time of the paging signaling in another operator network. The base station may not increase a signal power when determining a strength of the communication signal with the SIM card 1 to be weakened at the corresponding time. Therefore, an unnecessary operation of the base station may be reduced.

According to an embodiment of the present disclosure, the terminal may report the problem of communication conflict between the SIM cards to the base station, such that the base station may provide a solution for the terminal based on the problem of communication conflict. Therefore, the problem of communication conflict between the SIM cards in the terminal may be solved, and the terminal may smoothly communicate using the plurality of SIM cards.

In an embodiment, a new signaling may be added in a UEAssistanceInformation signaling. For example, the new signaling may be referred to as a musimAssistance signaling. Further, the musimAssistance signaling carrying the problem of communication conflict may be sent to the base station. The new signaling may also be directly defined. For example, the new signaling may be referred to as a MUSimIndication signaling. Further, the MUSimIndication signaling carrying the problem of communication conflict may be sent to the base station.

It should be noted that manners of reporting the problem of communication conflict are not limited to the foregoing two manners, and may be specifically set as required.

FIG. 2 is a flow diagram illustrating another method for reporting a problem according to an embodiment of the present disclosure. As illustrated in FIG. 2, reporting the problem of communication conflict to the base station may include the following steps.

At step S1011, a target SIM card having a communication link with any base station among the plurality of SIM cards, and a target base station having a communication link with the target SIM card are determined.

At step S 1012, the problem of communication conflict is reported to the target base station through the target SIM card.

In an embodiment, in a case that one SIM card among the plurality of SIM cards has the communication link with the base station at a same time, for example, the SIM card having the communication link with the base station is referred to as the target SIM card, and the base station having the communication link with the target SIM card is the target base station, the problem of communication conflict may be reported to the target base station through the target SIM card. Therefore, the base station may be informed of the problem of communication conflict in time.

FIG. 3 is a flow diagram illustrating another method for reporting a problem according to an embodiment of the present disclosure. As illustrated in FIG. 3, reporting the problem of communication conflict to the target base station through the target SIM card may include the following steps.

At step S1013, in response to a plurality of target SIM cards having communication links with a plurality of target base stations respectively, the problem of communication conflict is reported to the corresponding target base stations through the plurality of target SIM cards respectively, or the problem of communication conflict is reported to the corresponding target base station through one target SIM card in the plurality of target SIM cards.

In an embodiment, in a case that the SIM cards among the plurality of SIM cards have the communication links with the plurality of base stations at the same time, for example, the SIM cards having the communication links with the base stations are referred to as the target SIM cards, and the base stations having the communication links with the target SIM cards are referred to as the target base stations, the problem of communication conflict is reported to the corresponding target base stations through the target SIM cards respectively, or the problem of communication conflict is reported to the corresponding target base station through one target SIM card in the plurality of target SIM cards. Whether to report to the plurality of base stations or to one base station may be selected based on requirements.

In the case that the problem of communication conflict is reported to the plurality of base stations, the plurality of base stations may negotiate based on the problem of communication conflict. For example, for the problem of paging collision between the SIM card 1 and the SIM card 2, it is required for the base station corresponding to the SIM card 1 to reconfigure a timing of receiving the paging signaling for the corresponding SIM card 1, to be staggered with a timing of receiving the paging signaling for the SIM card 2, but not required for the base station corresponding to the SIM card 2 to reconfigure the timing of receiving the paging signaling.

FIG. 4 is a flow diagram illustrating another method for reporting a problem according to an embodiment of the present disclosure. As illustrated in FIG. 4, reporting the problem of communication conflict to the base station may include the following step.

At step S 1014, at least one of the following is reported to the base station:
a cause of the problem of communication conflict, time information at which the problem of communication conflict occurs, configuration information of SIM cards corresponding to the problem of communication conflict, identity information of the SIM cards corresponding to the problem of communication conflict, or a recommended solution of the problem of communication conflict.

In an embodiment, the problem of communication conflict reported by the terminal to the base station may include one or more of the cause of the problem of communication conflict, the time information at which the problem of communication conflict occurs, the configuration information of the SIM cards corresponding to the problem of communication conflict, the identity information of the SIM cards corresponding to the problem of communication conflict, or the recommended solution of the problem of communication conflict.

For example, the problem of communication conflict at least may include the cause of the problem of communication conflict, and one or more of the time information at which the problem of communication conflict occurs, the configuration information of the SIM cards corresponding to the problem of communication conflict, the identity information of the SIM cards corresponding to the problem of communication conflict, and the recommended solution of the problem of communication conflict may be selectively sent to the base station as auxiliary information.

With sending the cause of the problem of communication conflict to the base station, it is convenient for the base station to determine what causes the communication conflict, to formulate a corresponding solution to provide to the terminal. Therefore, the problem of communication conflict may be solved in a targeted manner.

With sending to the base station with one or more of the time information at which the problem of communication conflict occurs, the configuration information of the SIM cards corresponding to the problem of communication conflict (for example, the timings of receiving the paging signaling for the SIM cards) or the identity information of the SIM cards corresponding to the problem of communication conflict, it is convenient for the base station to accurately formulate the solution provided to the terminal.

With sending the recommended solution of the problem of communication conflict to the base station, the base station may determine whether the recommended solution is suitable, for example, whether the problem of communication conflict may be solved. When the recommended solution is suitable, it is required to indicate a confirmation instruction to the terminal, without transmitting complex signaling or data, or without generating the solution by the base station, which is conductive to simplifying operations of the base station and saving resources of the base station.

FIG. 5 is a flow diagram illustrating another method for reporting a problem according to an embodiment of the present disclosure. As illustrated in FIG. 5, the method may further include the following step.

At step S102, capability information is reported to the base station. The capability information is configured to indicate whether the terminal has a capability of reporting the problem of communication conflict.

In an embodiment, not all terminals may determine the problem of communication conflict between their own SIM cards, and some terminals may not have the capability of reporting the problem of communication conflict even if the terminals determine the problem of communication conflict between their own SIM cards. However, the terminal, which cannot determine the problem of communication conflict between its own SIM cards, or only has the capability of reporting the problem of communication conflict, does not have the capability of reporting the problem of communication conflict.

The terminal may report whether the terminal itself has the capability of reporting the problem of communication conflict to the base station through the capability information, so that the base station may determine whether the terminal has the capability of reporting the problem of communication conflict in time. When the terminal has the capability of reporting the problem of communication conflict, the base station may configure resources for the terminal to enable the terminal to report the problem of communication conflict. When the terminal does not have the capability of reporting the problem of communication conflict, the base station may determine whether the terminal possesses the problem of communication conflict, for example, whether there is the paging collision between the plurality of SIMs in the terminal may be determined by communicating with other operator networks, to actively provide a solution for the terminal. Therefore, the problem of communication conflict between the SIM cards in the terminal even if the terminal does not possess the capability of reporting the problem of communication conflict.

In an embodiment, the terminal may report the capability information through a UE-EUTRAN-Capability signaling, for example, through an OtherParameter signaling in the UE-EUTRAN-Capability. Additionally, the terminal may report the capability information through a UE-NR-Capability. Additionally, the terminal may report the capability information through a UE-MRDC-Capability signaling.

It should be noted that the manners of reporting capability information are not limited to the foregoing three manners, and may be specifically set based on requirements.

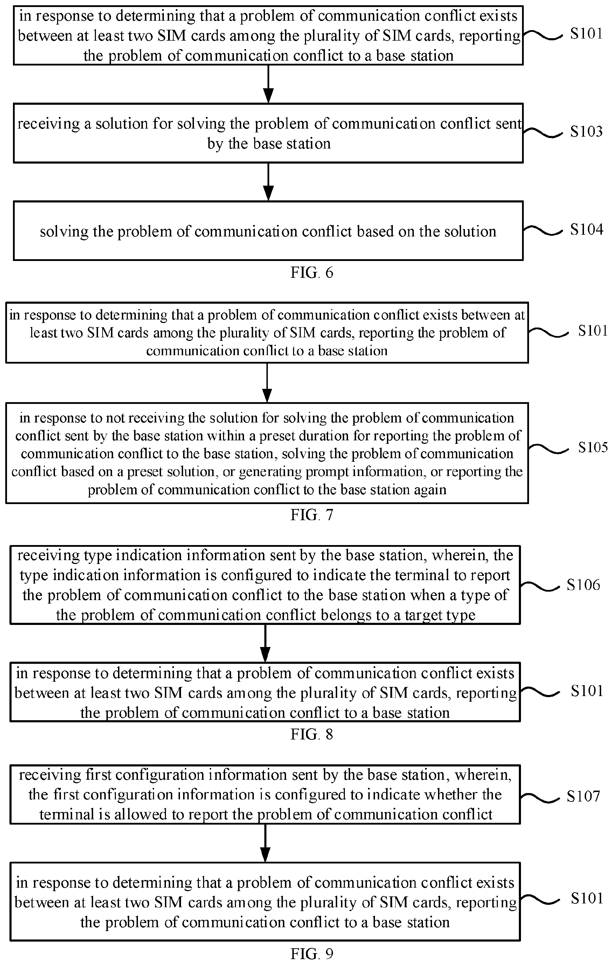

FIG. 6 is a flow diagram illustrating another method for reporting a problem according to an embodiment of the present disclosure. As illustrated in FIG. 6, the method may further include the following steps.

At step S103, a solution for solving the problem of communication conflict sent by the base station is received.

At step S104, the problem of communication conflict is solved based on the solution.

In an embodiment, the base station may generate the corresponding solution when receiving the problem of communication conflict, or select the solution corresponding to the received problem of communication conflict from prestored solutions, further send the solution to the terminal, so that the terminal solves the problem of communication conflict based on the solution, and performs communication normally.

FIG. 7 is a flow diagram illustrating another method for reporting a problem according to an embodiment of the present disclosure. As illustrated in FIG. 7, the method may further include the following step.

At step S105, in response to not receiving the solution for solving the problem of communication conflict sent by the base station within a preset duration for reporting the problem of communication conflict to the base station, the problem of communication conflict is solved based on a preset solution, or prompt information is generated, or the problem of communication conflict is reported to the base station again.

In an embodiment, for some reasons, the base station does not send the solution of the problem of communication conflict to the terminal within a longer time (for example, the preset duration) for some reasons, for example, the base station does not possess the capability of generating the solution, or the base station is busy in processing other services, or the base station does not provide the solution for the terminal that reports the problem of communication conflict.

In order to solve the problem of communication conflict in time, the terminal may solve the problem of communication conflict based on the preset solution (for example, the solution prestored in the terminal), or generate the prompt information to prompt a user of the terminal to manually solve (for example, restart the terminal), or report the problem of communication conflict to the base station again.

FIG. 8 is a flow diagram illustrating another method for reporting a problem according to an embodiment of the present disclosure. As illustrated in FIG. 8, the method may further include the following step.

At step S106, type indication information sent by the base station is received. The type indication information is configured to indicate the terminal to report the problem of communication conflict to the base station when a type of the problem of communication conflict belongs to a target type.

In response to determining the problem of communication conflict, the problem of communication conflict is reported to the base station when the type of the problem of communication conflict belongs to the target type.

In an embodiment, the base station may send the type indication to the terminal to indicate the terminal to report the problem of communication conflict to the base station when the type of the problem of communication conflict belongs to the target type. Therefore, the terminal may report the problem of communication conflict to the base station in response to determining the problem of communication conflict and determining that the type of the problem of communication conflict belongs to the target type, such that the base station may provide the solution for a specific type (i.e., the target type) of communication conflict.

Optionally, the problem of communication conflict is a problem of communication conflict to be occurred between the at least two SIMs among the plurality of SIM cards, or the problem of communication conflict is a problem of communication conflict that has existed between the at least two SIMs among the plurality of SIM cards.

In an embodiment, the problem of communication conflict may be the problem of communication conflict that will occur between the at least two SIMs among the plurality of SIM cards. For example, the terminal may determine whether the timings of receiving the paging signaling for two or more SIM cards in a future period of time overlap based on the timings of receiving the paging signaling for the SIM cards. In response to the timings overlapping, it may be determined that the problem of communication conflict is to be occurred, and the problem of communication conflict may be reported.

In an embodiment, the problem of communication conflict may be the problem of communication conflict that has existed between the at least two SIMs among the plurality of SIM cards. For example, the terminal may determine whether the above problem of communication link interruption has occurred on the plurality of SIM cards. In response to the problem of communication link interruption having occurred on the plurality of SIM cards, it is indicated that the problem of communication link interruption has existed, that is, the problem of communication conflict has existed, and the problem of communication conflict may be reported.

FIG. 9 is a flow diagram illustrating another method for reporting a problem according to an embodiment of the present disclosure. As illustrated in FIG. 9, the method may further include the following step.

At step S107, first configuration information sent by the base station is received. The first configuration information is configured to indicate whether the terminal is allowed to report the problem of communication conflict.

In response to determining that the terminal is allowed to report the problem of communication conflict based on the first configuration information, the problem of communication conflict is reported to the base station when determining the problem of communication conflict between the at least two SIMs among the plurality of SIM cards.

In an embodiment, the base station may indicate whether the terminal is allowed to report the problem of communication conflict by sending the indication information to the terminal. For example, the 5G base station may send the indication information carried in an OtherConfig signaling in RRCReconfiguration to the terminal, and the 4G base station may send the indication information carried in an OtherConfig signaling in RRCConnectionReconfiguration to the terminal.

The terminal may execute the step S101 when determining that the base station allows the terminal to report the problem of communication conflict based on the first configuration information, and report the problem of communication conflict to the base station when determining the problem of communication conflict between the at least two SIMs among the plurality of SIM cards.

The step S101 may not be executed when determining that the base station does not allow the terminal to report the problem of communication conflict based on the first configuration information. In this case, the base station may solve the problem of communication conflict based on a preset solution (for example, a solution prestored in the terminal), or generate prompt information to prompt a user of the terminal to manually solve (for example, restart the terminal). Therefore, the problem of communication conflict is solved in time.

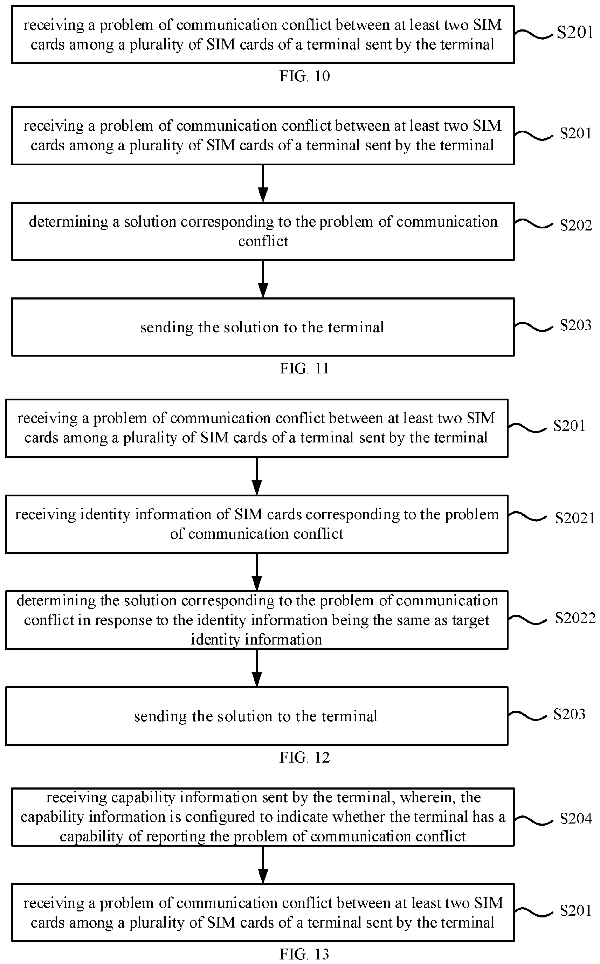

FIG. 10 is a flow diagram illustrating a method for receiving a problem according to an embodiment of the present disclosure. The method as illustrated in this embodiment may be applicable for a base station. The base station may include, but not limited to, a 4G base station, a 5G base station and a 6G base station. The base station may communicate with a terminal as a user equipment (UE). The terminal may include, but not limited to, a mobile phone, a tablet computer, a wearable device, a sensor, an Internet of things device and other electronic devices.

The terminal may be provided with a plurality of SIM cards, and all or part of SIM cards among the plurality of SIM cards may access different operator networks respectively or may access a same operator network. A communication mode supported by the plurality of SIMs may be set as required, such as dual-card single-standby, dual-card dual-standby single-pass, and dual-card dual-standby dual-pass.

As illustrated in FIG. 10, the method for receiving the problem may include the following steps.

At step S201, a problem of communication conflict between at least two SIM cards among a plurality of SIM cards of a terminal sent by the terminal is received.

According to an embodiment of the present disclosure, the base station may receive the problem of communication conflict between the at least two SIM cards among the plurality of SIM cards of the terminal, and may provide a solution for the terminal based on the problem of communication conflict. Therefore, the problem of communication conflict between the SIM cards in the terminal may be solved, to enable the terminal to communicate smoothly using the plurality of SIM cards.

FIG. 11 is a flow diagram illustrating another method for receiving a problem according to an embodiment of the present disclosure. As illustrated in FIG. 11, the method may further include the following steps.

At step S202, a solution corresponding to the problem of communication conflict is determined.

At step S203, the solution is sent to the terminal.

In an embodiment, the base station may generate the corresponding solution after receiving the problem of communication conflict, or select the solution corresponding to the received problem of communication conflict from prestored solutions, to send the solution to the terminal, to enable the terminal to solve the problem of communication conflict based on the solution and to communicate normally.

In an embodiment, determining the solution corresponding to the problem of communication conflict by the base station may include generating the solution by the base station, or further reporting the problem of communication conflict to a core network by the base station, such that the core network may generate the solution and feedback the solution to the base station.

FIG. 12 is a flow diagram illustrating another method for receiving a problem according to an embodiment of the present disclosure. As illustrated in FIG. 12, determining the solution corresponding to the problem of communication conflict may include the following steps.

At step S2021, identity information of SIM cards corresponding to the problem of communication conflict is received.
at step S2022, a solution corresponding to the problem of communication conflict is determined in response to the identity information being the same as target identity information.

In an embodiment, the terminal may send the identity information to the base station. The base station may prestore the target identity information (may include one or more pieces of identity information), and further determine whether the identity information received is the same as the target identity information, and determine the solution corresponding to the problem of communication conflict in response to the identity information received being the same as the target identity information. Therefore, solving the problem of communication conflict for the SIM card with specific identity information (for example, target identity information) may be realized.

FIG. 13 is a flow diagram illustrating another method for receiving a problem according to an embodiment of the present disclosure. As illustrated in FIG. 13, the method may further include the following step.

At step S204, capability information sent by the terminal is received. The capability information is configured to indicate whether the terminal has a capability of reporting the problem of communication conflict.

In an embodiment, not all terminals may determine the problem of communication conflict between their own SIM cards, and some terminals may not have the capability of reporting the problem of communication conflict even if the terminals determine the problem of communication conflict between their own SIM cards. However, the terminal, which cannot determine the problem of communication conflict between its own SIM cards, or only has the capability of reporting the problem of communication conflict, does not have the capability of reporting the problem of communication conflict.

The terminal may report whether the terminal itself has the capability of reporting the problem of communication conflict to the base station through the capability information, so that the base station may determine whether the terminal has the capability of reporting the problem of communication conflict in time by receiving the capability information. When the terminal has the capability of reporting the problem of communication conflict, the base station may configure resources for the terminal to enable the terminal to report the problem of communication conflict. When the terminal does not have the capability of reporting the problem of communication conflict, the base station may determine whether the terminal possesses the problem of communication conflict, for example, whether there is the paging collision between the plurality of SIMs in the terminal may be determined by communicating with other operator networks, to actively provide a solution for the terminal. Therefore, the problem of communication conflict between the SIM cards in the terminal even if the terminal does not possess the capability of reporting the problem of communication conflict.

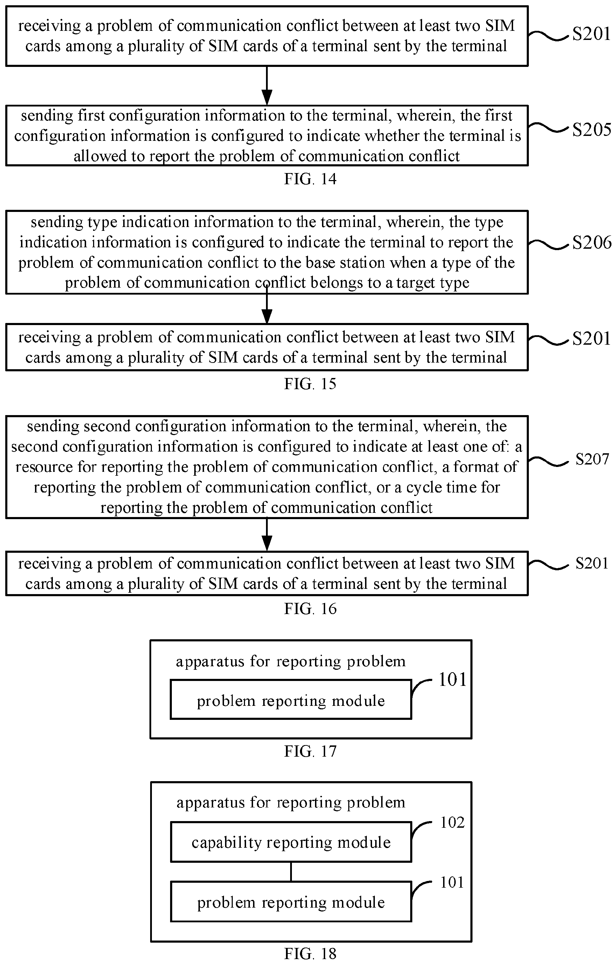

FIG. 14 is a flow diagram illustrating another method for receiving a problem according to an embodiment of the present disclosure. As illustrated in FIG. 14, the method may further include the following step.

At step S205, first configuration information is sent to the terminal. The first configuration information is configured to indicate whether the terminal is allowed to report the problem of communication conflict.

In an embodiment, the base station may send the indication information to the terminal to indicate whether the terminal is allowed to report the problem of communication conflict, so that the base station controls the terminal to report the problem of communication conflict.

FIG. 15 is a flow diagram illustrating another method for receiving a problem according to an embodiment of the present disclosure. As illustrated in FIG. 15, the method may further include the following step.

At step S206, type indication information is sent to the terminal. The type indication information is configured to indicate the terminal to report the problem of communication conflict to the base station when a type of the problem of communication conflict belongs to a target type.

In an embodiment, the base station may send the type indication to the terminal to indicate the terminal to report the problem of communication conflict to the base station when the type of the problem of communication conflict belongs to the target type. Therefore, the terminal may report the problem of communication conflict to the base station in response to determining the problem of communication conflict and determining that the type of the problem of communication conflict belongs to the target type, such that the base station may provide the solution for a specific type (i.e., the target type) of communication conflict.

FIG. 16 is a flow diagram illustrating another method for receiving a problem according to an embodiment of the present disclosure. As illustrated in FIG. 16, the method may further include the following step.

At step S207, second configuration information is sent to the terminal. The second configuration information is configured to indicate at least one of:
a resource for reporting the problem of communication conflict, a format of reporting the problem of communication conflict, or a cycle time for reporting the problem of communication conflict.

In an embodiment, the base station may send configuration indication information to the terminal, so that the terminal may report the problem of communication conflict to the terminal based on the configuration indication information.

The configuration indication information may indicate the resource for reporting the problem of communication conflict, and the terminal may report the problem of communication conflict to the base station on the resource. The configuration indication information may additionally indicate the format of reporting the problem of communication conflict, and the terminal may adjust the problem of communication conflict into the format for reporting, to enable the base station to receive. The configuration indication information may additionally indicate the cycle time for reporting the problem of communication conflict, and the terminal may report the problem of communication conflict based on the cycle time, to prevent the terminal from occupying the communication resource due to reporting the communication conflict too frequently. The cycle time may be implemented by a block timer and a timing period. The terminal may restart the block timer every time the terminal reports the problem of communication conflict, and may not report the problem of communication conflict before the timing of the block timer reaches the timing period.

Corresponding to embodiments of the method for reporting the problem and the method for receiving the problem, embodiments of an apparatus for reporting the problem and an apparatus for receiving the problem are further provided in the disclosure.

FIG. 17 is a block diagram illustrating an apparatus for reporting a problem according to an embodiment of the present disclosure. The apparatus as illustrated in this embodiment may be applicable for a terminal. The terminal may include, but not limited to, a mobile phone, a tablet computer, a wearable device, a sensor, an Internet of things device and other electronic devices. The terminal as a user equipment (UE) may communicate with a base station. The base station may include, but not limited to, a 4G base station, a 5G base station and a 6G base station.

The terminal may be provided with a plurality of SIM cards, and all or part of SIM cards among the plurality of SIM cards may access different operator networks respectively or may access a same operator network. The communication modes supported by the plurality of SIMs may be set as required, such as dual-card single-standby, dual-card dual-standby single-pass, and dual-card dual-standby dual-pass.

As illustrated in FIG. 17, the apparatus for reporting the problem may include a problem reporting module 101.

The problem reporting module 101 is configured to, in response to determining that a problem of communication conflict exists between at least two SIM cards among the plurality of SIM cards, report the problem of communication conflict to a base station.

Optionally, the problem reporting module is configured to determine a target SIM card having a communication link with a base station among the plurality of SIM cards, and a target base station having the communication link with the target SIM card; and report the problem of communication conflict to the target base station through the target SIM card.

Optionally, the problem reporting module is configured to, in response to a plurality of target SIM cards having communication links with a plurality of target base stations respectively, report the problem of communication conflict to the corresponding target base station through the plurality of target SIM cards respectively, or report the problem of communication conflict to the corresponding target base station through one target SIM card in the plurality of target SIM cards.

Optionally, the problem reporting module, is configured to report at least one of the following to the base station:
a cause of the problem of communication conflict, time information at which the problem of communication conflict occurs, configuration information of SIM cards corresponding to the problem of communication conflict, identity information of the SIM cards corresponding to the problem of communication conflict, or a recommended solution of the problem of communication conflict.

FIG. 18 is a block diagram illustrating another apparatus for reporting a problem according to an embodiment of the present disclosure. As illustrated in FIG. 18, the apparatus further includes a capability reporting module 102.

The capability reporting module 102 is configured to report capability information to the base station. The capability information is configured to indicate whether the terminal has a capability of reporting the problem of communication conflict.

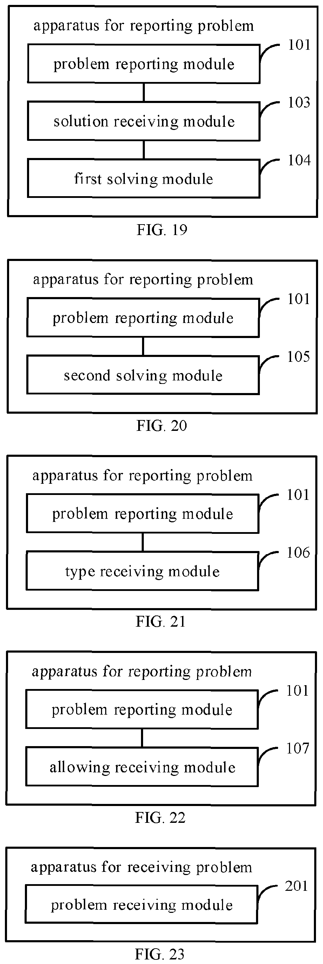

FIG. 19 is a block diagram illustrating another apparatus for reporting a problem according to an embodiment of the present disclosure. As illustrated in FIG. 19, the apparatus further includes a solution receiving module 103 and a first solving module 104.

The solution receiving module 103 is configured to receive a solution for solving the problem of communication conflict sent by the base station; and
the first solving module 104 is configured to solve the problem of communication conflict based on the solution.

FIG. 20 is a block diagram illustrating another apparatus for reporting a problem according to an embodiment of the present disclosure. As illustrated in FIG. 20, the apparatus further includes a second solving module 105.

The second solving module 105 is configured to, in response to not receiving the solution for solving the problem of communication conflict sent by the base station within a preset duration for reporting the problem of communication conflict to the base station, solve the problem of communication conflict based on a preset solution, or generate prompt information, or report the problem of communication conflict to the base station again.

FIG. 21 is a block diagram illustrating another apparatus for reporting a problem according to an embodiment of the present disclosure. As illustrated in FIG. 21, the apparatus further includes a type receiving module 106.

The type receiving module 106 is configured to receive type indication information sent by the base station. The type indication information is configured to indicate the terminal to report the problem of communication conflict to the base station when a type of the problem of communication conflict belongs to a target type.

The problem reporting module101 is configured to, in response to determining the problem of communication conflict, report the problem of communication conflict to the base station when the type of the problem of communication conflict belongs to the target type.

Optionally, the problem of communication conflict may include a problem of communication conflict to be occurred between the at least two SIMs among the plurality of SIM cards, or the problem of communication conflict may include a problem of communication conflict that has existed between the at least two SIMs among the plurality of SIM cards.

Optionally, the problem of communication conflict includes at least one of:
a problem of paging collision, a problem of communication link interruption or a problem of failure connection for a service to be connected.

FIG. 22 is a block diagram illustrating another apparatus for reporting a problem according to an embodiment of the present disclosure. As illustrated in FIG. 22, the apparatus further includes an allowing receiving module 107.

The allowing receiving module 107 is configured to receive first configuration information sent by the base station. The first configuration information is configured to indicate whether the terminal is allowed to report the problem of communication conflict.

The problem reporting module 102 is configured to, in response to determining that the terminal is allowed to report the problem of communication conflict based on the first configuration information, report the problem of communication conflict to the base station when determining the problem of communication conflict between the at least two SIMs among the plurality of SIM cards in response to determining that the terminal is allowed to report the problem of communication conflict.

FIG. 23 is a block diagram illustrating an apparatus for receiving a problem according to an embodiment of the present disclosure. The apparatus as illustrated in this embodiment may be applicable for a base station. The base station may include, but not limited to, a 4G base station, a 5G base station and a 6G base station. The base station may communicate with a terminal as a user equipment (UE). The terminal may include, but not limited to a mobile phone, a tablet computer, a wearable device, a sensor, an Internet of things device and other electronic devices.

The terminal may be provided with a plurality of SIM cards, and all or part of SIM cards among the plurality of SIM cards may access different operator networks respectively or may access a same operator network. A communication mode supported by the plurality of SIMs may be set as required, such as dual-card single-standby, dual-card dual-standby single-pass, and dual-card dual-standby dual-pass.

As illustrated in FIG. 23, the apparatus for receiving the problem may include a problem receiving module 201.

The problem receiving module 201 is configured to receive a problem of communication conflict between at least two SIM cards among the plurality of SIM cards of the terminal sent by the terminal.

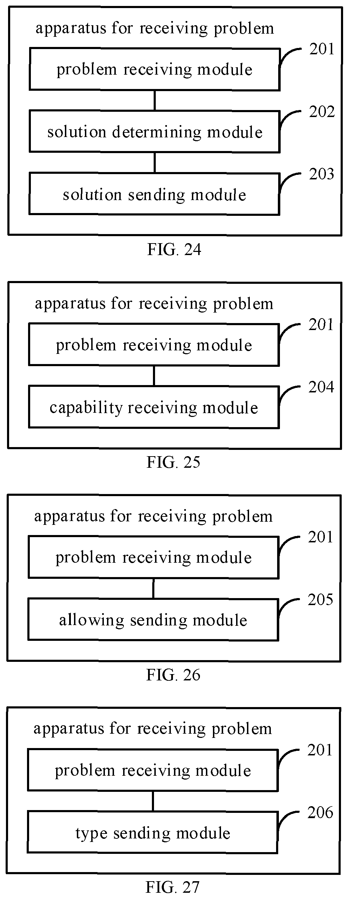

FIG. 24 is a block diagram illustrating another apparatus for receiving a problem according to an embodiment of the present disclosure. As illustrated in FIG. 24, the apparatus further includes a solution determining module 202 and a solution sending module 203.

The solution determining module 202 is configured to determine a solution corresponding to the problem of communication conflict; and
the solution sending module 203 is configured to send the solution to the terminal.

Optionally, the solution determining module is configured to receive identity information of SIM cards corresponding to the problem of communication conflict; and determine a solution corresponding to the problem of communication conflict in response to the identity information being the same as target identity information.

FIG. 25 is a block diagram illustrating another apparatus for receiving a problem according to an embodiment of the present disclosure. As illustrated in FIG. 25, the apparatus further includes a capability receiving module 204.

The capability receiving module 204 is configured to receive capability information sent by the terminal. The capability information is configured to indicate whether the terminal has a capability of reporting the problem of communication conflict.

FIG. 26 is a block diagram illustrating another apparatus for receiving a problem according to an embodiment of the present disclosure. As illustrated in FIG. 26, the apparatus further includes an allowing sending module 205.

The allowing sending module 205 is configured to send first configuration information to the terminal. The first configuration information is configured to indicate whether the terminal is allowed to report the problem of communication conflict.

FIG. 27 is a block diagram illustrating another apparatus for receiving a problem according to an embodiment of the present disclosure.

As illustrated in FIG. 27, the apparatus further includes a type sending module 206.

The type sending module 206 is configured to send type indication information to the terminal. The type indication information is configured to indicate the terminal to report the problem of communication conflict to the base station when a type of the problem of communication conflict belongs to a target type.

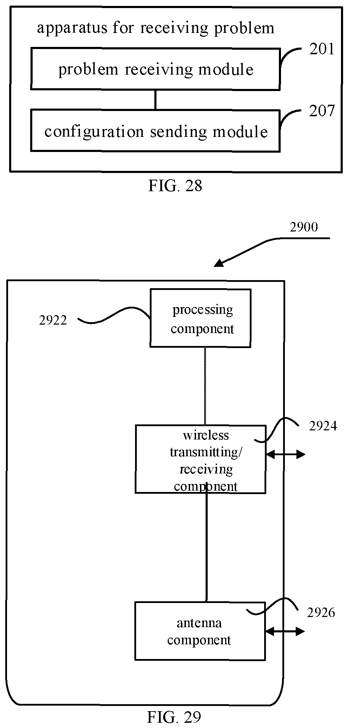

FIG. 28 is a block diagram illustrating another apparatus for receiving a problem according to an embodiment of the present disclosure. As illustrated in FIG. 28, the apparatus further includes a configuration sending module 207.

The configuration sending module 207 is configured to send second configuration information to the terminal. The second configuration information is configured to indicate at least one of:
a resource for reporting the problem of communication conflict, a format of reporting the problem of communication conflict, or a cycle time for reporting the problem of communication conflict.

With regard to the apparatus in the above embodiments, the specific way that each module performs the operation has been described in detail in embodiments of the method and will not be described here.

Embodiments of the apparatus refers to part descriptions of embodiments of the method since embodiments of the apparatus refers basically correspond to embodiments of the method. Embodiments of the apparatus described above are illustrative, in which the above modules described as separate parts may or may not be physically separated, the parts shown as modules may or may not be physical modules, that is, may be located in one place, or may be distributed on a plurality of network modules. Some or all modules may be selected according to actual requirements to achieve the purpose of the present disclosure. Those skilled in the art may understand and implement the present disclosure without any creative effort.

An electronic device is further provided in the disclosure, and includes:
a processor; and
a memory configured to store instructions executable by the processor;
the processor is configured to implement the method for reporting a problem as described in the above any embodiment, and/or the method for receiving a problem as described in the above any embodiment.

A computer readable storage medium with a computer program stored thereon is provided in the disclosure. The program implements the method for reporting a problem as described in the above any embodiment, and/or steps of the method for receiving a problem as described in the above any embodiment when executed by a processor.

FIG. 29 is a block diagram illustrating a device 2900 for receiving a problem according to embodiments of the present disclosure. The device 2900 may be provided as a base station. As illustrated in FIG. 29, the device 2900 includes a processing component 2922, a wireless transmitting/receiving component 2924, an antenna component 2926, and a signal processing unit peculiar to a wireless interface, and the processing component 2922 may further include one or more processors. One processor of the processing component 2922 may be configured to implement the method for receiving the problem in the above any embodiment.

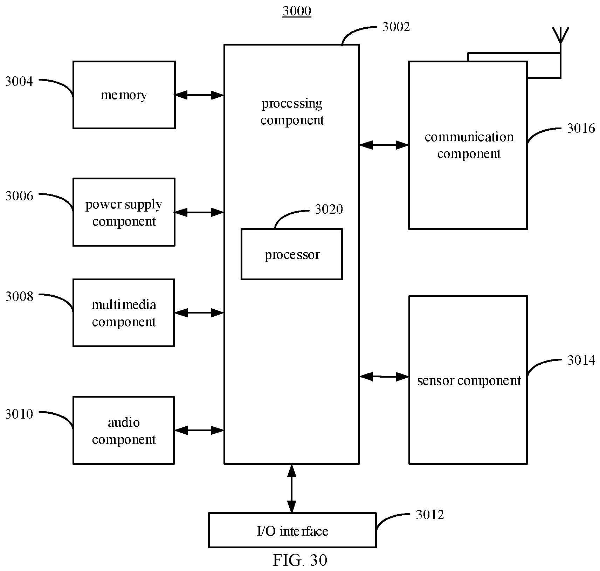

FIG. 30 is a block diagram illustrating a device 3000 for reporting a problem according to embodiments of the present disclosure. For example, the device 3000 may be a mobile phone, a computer, a digital broadcasting terminal, a messaging device, a game console, a tablet device, a medical equipment, a fitness equipment, a personal digital assistant, etc.

As illustrated FIG. 30, the device 3000 may include one or more components: a processing component 3002, a memory 3004, a power supply component 3006, a multimedia component 3008, an audio component 3010, an input/output (I/O) interface 3012, a sensor component 3014, and a communication component 3016.

The processing component 3002 generally controls the whole operation of the device 3000, such as the operations related to display, phone call, data communication, camera operation and recording operation. The processing component 3002 may include one or more processors 3020 to perform instructions, to complete all or part of steps of the above method for reporting the problem. In addition, the processing component 3002 may include one or more modules for the convenience of interaction between the processing component 3002 and other components. For example, the processing component 3002 may include a multimedia module for the convenience of interaction between the multimedia component 3008 and the processing component 3002.

The memory 3004 is configured to store all types of data to support the operation of the device 3000. Examples of the data include the instructions of any applications or methods operated on the device 3000, contact data, phone book data, messages, pictures, videos, etc. The memory 3004 may be implemented by any type of volatile or non-volatile storage devices or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 3006 may provide power supply for all components of the device 3000. The power supply component 3006 may include power supply management system, one or more power supplies, and other units related to generating, managing and distributing power for the device 3000.

The multimedia component 3008 includes an output interface screen provided between the device 3000 and the user. In some embodiments, a screen may include a liquid crystal display (LCD) and a touch panel (TP). When the screen includes a touch panel, the screen may be implemented as a touch screen to receive input signals from the user. The touch panel includes one or more touch sensors to sense touch, slide and gestures on the touch panel. The touch sensor may not only sense the boundary of touch or slide action, but also detect the duration and pressure related to the touch or slide operation. In some embodiments, the multimedia component 3008 includes a front camera and/or a rear camera. When the device 3000 is in an operation mode, such as a shooting mode or a video mode, the front camera or the rear camera may receive external multimedia data. Each front camera and rear camera may be a fixed optical lens system or an optical lens system with a focal length and an optical zoom capacity.

The audio component 3010 is configured as an output and/or input signal. For example, the audio component 3010 includes a microphone (MIC). When the device 3000 is in operation mode, such as call mode, record mode, and speech recognition mode, the microphone is configured to receive the external audio signals. The audio signals received may be further stored in the memory 3004 or sent via the communication component 3016. In some embodiments, the audio component 3010 further includes a speaker configured to output an audio signal.

The I/O interface 3012 provides an interface for the processing component 3002 and the peripheral interface module, and the peripheral interface module may be a keyboard, a click wheel, a button, etc. The buttons may include but not limited to a home button, a volume button, a start button and a lock button.

The sensor component 3014 includes one or more sensors, configured to provide various aspects of status assessment for the device 3000. For example, the sensor component 3014 may detect the on/off state of the device 3000 and the relative positioning of the component. For example, the component is a display and a keypad of the device 3000. The sensor component 3014 may further detect the location change of the device 3000 or one component of the device 3000, the presence or absence of contact between the user and the device 3000, the orientation or acceleration/deceleration of the device 3000, and the temperature change of the device 3000. The sensor component 3014 may include a proximity sensor, which is configured to detect the existence of the objects nearby without any physical contact. The sensor component 3014 may further include a light sensor such as CMOS or CCD image sensor, which is configured to use in imaging applications. In some embodiments, the sensor component 3014 may further include an acceleration transducer, a gyroscope sensor, a magnetic sensor, a pressure sensor or a temperature sensor.

The communication component 3016 is configured for the convenience of wire or wireless communication between the device 3000 and other devices. The device 3000 may access wireless networks based on communication standard, such as Wi-Fi, 2G or 3G, 4G NR or their combination. In an exemplary embodiment, the communication component 3016 receives broadcast signals or broadcast-related information from an external broadcast management system via a broadcast channel. In an example embodiment, the communication component 3016 further includes a near field communication (NFC) module to facilitate short-range communication. For example, an NFC module may be implemented based on a radio frequency identification (RFID) technology, an infrared data association (IRDA) technology, an ultra-wideband (UWB) technology, Bluetooth (BT) technology and other technologies.

In an exemplary embodiment, the device 3000 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method for reporting the problem.

In an exemplary embodiment, a non-transitory computer readable storage medium is further provided which includes instructions, such as the memory 3004 including instructions, wherein the instructions may be executed by the processor 3020 of the device 3000 to complete the above method for reporting the problem. For example, the non-transitory computer readable storage medium may be a ROM, a random-access memory (RAM), a CD-ROM, a magnetic tape, a floppy disk, an optical data storage device, etc.

After considering the specification and practicing the disclosure herein, those skilled in the art will easily think of other embodiments of the present application. The present application is intended to cover any variations, usages, or adaptive changes of the present application. These variations, usages, or adaptive changes follow the general principles of the present application and include common knowledge or conventional technical means in the technical field not disclosed by the present application. The description and the embodiments are to be regarded as exemplary only, and the true scope and spirit of the present application are referred to the appended claims. The present application is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are given by the appended claims.

It should be understood that the present disclosure is not limited to the precise structure described above and shown in the drawings, and various modifications and changes may be made without departing from its scope. The scope of the present application is only limited by the appended claims. The scope of the present application is only limited by the appended claims.

It should be noted that relational terms such as first and second are used herein to distinguish one entity or operation from another entity or operation without necessarily requiring or implying any such actual relationship or order between such entities or operations. The terms "comprise", "comprising" or any other variations thereof, are intended to cover a non-exclusive inclusion, such that a process, a method, an article or a device including a series of elements not only includes those elements but also includes other elements not expressly listed, or may further include elements inherent to such process, method, article, or device. In the absence of more constraints, the elements defined by a sentence "comprising one" do not preclude the presence of additional same elements in the process, method, article, or apparatus that includes the elements.

The above are detailed descriptions of embodiments of the present disclosure. Specific examples are applied to elaborate principles and implementations of the present disclosure. The descriptions of the above embodiments are only configured to help understand the method and core concepts of the present disclosure; at the same time, for those skilled in the art, there may be changes in the specific implementation and application scope according to the idea of the present disclosure. In summary, the contents of the summary should not be construed as a limitation of the present disclosure.

## Claims

1. A method for reporting a problem, applicable for a terminal provided with a plurality of subscriber identity module (SIM) cards, the method comprising:
in response to determining that a problem of communication conflict exists between at least two SIM cards among the plurality of SIM cards, reporting the problem of communication conflict to a base station.

2. The method of claim 1, wherein reporting the problem of communication conflict to the base station comprises:
determining a target SIM card having a communication link with any base station among the plurality of SIM cards, and a target base station having the communication link with the target SIM card; and
reporting the problem of communication conflict to the target base station through the target SIM card.

3. The method of claim 1, wherein reporting the problem of communication conflict to the target base station through the target SIM card comprises:
in response to a plurality of target SIM cards having communication links with a plurality of target base stations respectively, reporting the problem of communication conflict to the corresponding target base stations through the plurality of target SIM cards respectively, or reporting the problem of communication conflict to the corresponding target base station through one target SIM card in the plurality of target SIM cards.

4. The method of claim 1, wherein reporting the problem of communication conflict to the base station comprises:
reporting at least one of the following to the base station:
a cause of the problem of communication conflict, time information at which the problem of communication conflict occurs, configuration information of SIM cards corresponding to the problem of communication conflict, identity information of the SIM cards corresponding to the problem of communication conflict, or a recommended solution of the problem of communication conflict.

5. The method of claim 1, further comprising:
reporting capability information to the base station, wherein, the capability information is configured to indicate whether the terminal has a capability of reporting the problem of communication conflict.

6. The method of claim 1, further comprising:
receiving a solution for solving the problem of communication conflict sent by the base station; and
solving the problem of communication conflict based on the solution.

7. The method of claim 1, further comprising:
in response to not receiving the solution for solving the problem of communication conflict sent by the base station within a preset duration for reporting the problem of communication conflict to the base station, solving the problem of communication conflict based on a preset solution, or generating prompt information, or reporting the problem of communication conflict to the base station again.

8. The method of claim 1, further comprising:
receiving type indication information sent by the base station, wherein, the type indication information is configured to indicate the terminal to report the problem of communication conflict to the base station when a type of the problem of communication conflict belongs to a target type;
wherein, in response to determining the problem of communication conflict, the problem of communication conflict is reported to the base station when the type of the problem of communication conflict belongs to the target type.

9. The method of any one of claims 1 to 8, wherein, the problem of communication conflict is a problem of communication conflict to be occurred between the at least two SIMs among the plurality of SIM cards, or the problem of communication conflict is a problem of communication conflict having existed between the at least two SIMs among the plurality of SIM cards.

10. The method of any one of claims 1 to 8, wherein, the problem of communication conflict comprises at least one of:
a problem of paging collision, a problem of communication link interruption or a problem of failure connection for a service to be connected.

11. The method of any one of claims 1 to 8, further comprising:
receiving first configuration information sent by the base station, wherein, the first configuration information is configured to indicate whether the terminal is allowed to report the problem of communication conflict;
wherein, in response to determining that the terminal is allowed to report the problem of communication conflict based on the first configuration information, the problem of communication conflict is reported to the base station when determining the problem of communication conflict between the at least two SIMs among the plurality of SIM cards.

12. A method for receiving a problem, applicable for a base station, the method comprising:
receiving a problem of communication conflict between at least two SIM cards among a plurality of SIM cards of a terminal sent by the terminal.

13. The method of claim 12, further comprising:
determining a solution corresponding to the problem of communication conflict; and
sending the solution to the terminal.

14. The method of claim 13, wherein determining the solution corresponding to the problem of communication conflict comprises:
receiving identity information of SIM cards corresponding to the problem of communication conflict; and
determining the solution corresponding to the problem of communication conflict in response to the identity information being the same as target identity information.

15. The method of any one of claims 12 to 14, further comprising:
receiving capability information sent by the terminal, wherein, the capability information is configured to indicate whether the terminal has a capability of reporting the problem of communication conflict.

16. The method of claim 15, further comprising:
sending first configuration information to the terminal, wherein, the first configuration information is configured to indicate whether the terminal is allowed to report the problem of communication conflict.

17. The method of claim 15, further comprising:
sending type indication information to the terminal, wherein, the type indication information is configured to indicate the terminal to report the problem of communication conflict to the base station when a type of the problem of communication conflict belongs to a target type.

18. The method of claim 15, further comprising:
sending second configuration information to the terminal;
wherein, the second configuration information is configured to indicate at least one of:
a resource for reporting the problem of communication conflict, a format of reporting the problem of communication conflict, or a cycle time for reporting the problem of communication conflict.

19. An apparatus for reporting a problem, applicable for a terminal provided with a plurality of SIM cards, the apparatus comprising:
a problem reporting module, configured to, in response to determining that a problem of communication conflict exists between at least two SIMs among the plurality of SIM cards, report the problem of communication conflict to a base station.

20. An apparatus for receiving a problem, applicable for a base station, the apparatus comprising:
a problem receiving module, configured to receive a problem of communication conflict between at least two SIM cards among a plurality of SIM cards of a terminal sent by the terminal.

21. An electronic device, comprising:
a processor; and
a memory configured to store instructions executable by the processor;
wherein, the processor is configured to implement the method for reporting a problem of any one of claims 1 to 11, and/or the method for receiving a problem of any one of claims 12 to 18.

22. A computer readable storage medium with a computer program stored thereon, wherein the program is configured to implement the method for reporting a problem of any one of claims 1 to 11, and/or steps of the method for receiving a problem of any one of claims 12 to 18 when executed by a processor.
